# EUROPEAN PATENT APPLICATION

(11) **EP 4 447 553 A1**
(43) Date of publication of application: **16.10.2024**
(21) Application number: 23737182.8
(22) Date of filing: 06.01.2023
(51) Int. Cl.: H04W 36/08

(54) **COMMUNICATION METHOD AND APPARATUS**

(30) Priority: 10.01.2022 CN 202210023300
(71) Applicant: Huawei Technologies Co., Ltd., Shenzhen, Guangdong 518129 (CN)
(72) Inventor: WANG, Yu, Shenzhen, Guangdong 518129 (CN); LUO, Hejia, Shenzhen, Guangdong 518129 (CN); LI, Rong, Shenzhen, Guangdong 518129 (CN); WANG, Jun, Shenzhen, Guangdong 518129 (CN)
(74) Representative: MERH-IP Matias Erny Reichl Hoffmann Patentanwälte PartG mbB
(86) International application number: PCT/CN2023/071118
(87) International publication number: WO 2023/131320

(57) **Abstract**

A communication method and apparatus are provided. The method includes: A terminal device obtains first information, where the first information is used for mobility management of ascending-orbit and descending-orbit cells, and the first information is related to a latitude location. The terminal device performs the mobility management based on the first information. According to the method, in a scenario of ascending-orbit and descending-orbit cells in a satellite network, mobility management does not need to be frequently performed with frequency switching of ascending and descending orbits. In this way, efficiency of the mobility management of the terminal device can be improved, and system signaling overheads can also be reduced.

## Description

### CROSS-REFERENCE TO RELATED APPLICATIONS

This application claims priority to Chinese Patent Application No. 202210023300.6, filed with the China National Intellectual Property Administration on January 10, 2022 and entitled "COMMUNICATION METHOD AND APPARATUS", which is incorporated herein by reference in its entirety.

### TECHNICAL FIELD

This application relates to the field of wireless communication, and in particular, to a communication method and apparatus.

### BACKGROUND

A non-terrestrial communication network (non-terrestrial network, NTN) includes nodes such as a satellite network, a high altitude platform, and an uncrewed aerial vehicle. Because of features such as a long communication distance, wide coverage, flexible networking, and being not limited by a geographical condition and a ground device condition, the non-terrestrial network is widely used in a plurality of fields such as maritime communication, positioning and navigation, disaster relief, scientific experiments, video broadcasting, and earth observation.

The satellite network is an important part of the NTN. As a next generation satellite network continuously tends to be ultra-dense and heterogeneous generally, the satellite network finally develops to a starlink (Starlink) ultra-dense low earth orbit (low earth orbit, LEO) satellite constellation. Functions of the satellite network also tend to be complex and diversified. An inclined orbit LEO constellation mainly includes an ascending-orbit satellite and a descending-orbit satellite, and forms multiple coverage on the ground. In addition, in the LEO constellation, a frequency division manner of ascending and descending orbits is usually used to avoid communication interference. To be specific, the ascending-orbit satellite uses a frequency f1, and the descending-orbit satellite uses a frequency f2. However, at an ascending and descending orbit switching point (that is, in a high-latitude area), the satellite needs to perform frequency/polarization switching (in other words, a frequency switching problem of the ascending and descending orbits exists). In this case, a terminal device within coverage of the satellite needs to be forced to perform cell handover/reselection.

A mobility management mechanism of an existing 5th generation (5th Generation, 5G) new radio (new radio, NR)/NTN cell is applied to ascending-orbit and descending-orbit cells. It is clear that, efficiency is not high. For example, a success rate of cell handover/reselection is not high, and a system message (for example, a cell-specific timer cell-specific Timer) needs to be frequently updated and dynamically configured, resulting in high system overheads. Therefore, a communication method urgently needs to be provided, to implement mobility management of ascending-orbit and descending-orbit cells, for example, cell handover/reselection.

### SUMMARY

A communication method and apparatus are provided, to implement mobility management of ascending-orbit and descending-orbit cells, so that efficiency of the mobility management can be improved, and system signaling overheads can also be reduced.

According to a first aspect, an embodiment of this application provides a communication method. The method may be performed by a processor of a terminal device, or may be performed by a chip corresponding to the processor. This is not limited herein. Specifically, the following steps are included. The terminal device obtains first information, where the first information is used for mobility management of ascending-orbit and descending-orbit cells, and the first information is related to a latitude location. The terminal device performs the mobility management based on the first information.

Because the first information obtained by the terminal device is used for the mobility management of the ascending-orbit and descending-orbit cells, and the first information is related to the latitude location, it can be learned that in a scenario of ascending-orbit and descending-orbit cells in a satellite network, the terminal device can accurately perform the mobility management based on the first information, and does not need to frequently perform the mobility management with frequency switching of ascending and descending orbits. In this way, efficiency of the mobility management can be improved, and signaling overheads caused by frequent mobility management can also be reduced.

In a possible implementation, the first information includes at least one of the following: a handover condition, information about a first timer, frequency information, and polarization information.

It should be noted that the handover condition may include a plurality of threshold values, for example, a latitude threshold value and a longitude threshold value. When the terminal device determines that the handover condition is met, the mobility management, for example, cell handover, may be performed. The frequency information may include frequency information and frequency priority information of a cell accessed by the terminal device. The polarization information may specifically include one or more of linear polarization information, left-hand circular polarization information, right-hand circular polarization information, and elliptical polarization information.

In this implementation, the terminal device may flexibly use the information included in the first information to perform the mobility management of the ascending-orbit and descending-orbit cells.

In a possible implementation, the handover condition is determined based on the latitude location of the terminal device.

In this implementation, because the handover condition is determined based on the latitude location of the terminal device, in the scenario of the ascending-orbit and descending-orbit cells in the satellite network, the terminal device can accurately perform the mobility management based on the handover condition.

In a possible implementation, the first information includes beam position information. The beam position information includes at least one of the following: index information of a beam position, location information of a reference point of the beam position, handover indication information, and information about a second timer.

In this implementation, the terminal device may further obtain the beam position information from the first information, so that the terminal device may flexibly use the information included in the beam information to perform the mobility management of the ascending-orbit and descending-orbit cells.

In a possible implementation, the first information includes serving cell information. The serving cell information includes information about a neighboring cell. The information about the neighboring cell includes first request information. The first request information is used to request ascending-orbit or descending-orbit type information of the neighboring cell.

In this implementation, for a problem of difficulty in collaborating ascending-orbit and descending-orbit neighboring cells, the terminal device may further measure and report a type of the neighboring cell (that is, an ascending-orbit cell or a descending-orbit cell), to assist in updating a neighboring cell relation for the ascending-orbit and descending-orbit neighboring cells.

In a possible implementation, the method further includes: The terminal device determines, based on the serving cell information, type information of a cell accessed by the terminal device. The terminal device switches to use configuration information of a neighboring cell of a same type based on the type information of the cell accessed by the terminal device. Alternatively, the terminal device determines, based on the frequency information, frequency information of a cell accessed by the terminal device. The terminal device switches to use configuration information of a neighboring cell of a same frequency based on the frequency information of the cell accessed by the terminal device.

In this implementation, when performing handover/reselection on the ascending-orbit and descending-orbit cells, the terminal device preferentially hands over/reselects a cell of a same type or a cell of a same frequency. In this way, normal communication between the terminal device and a network device can be ensured, and system overheads can be reduced.

In a possible implementation, configuration information of the neighboring cell includes neighboring cell identifier information, neighboring cell relation information, and latitude location information of the neighboring cell. Whether the neighboring cell is an activated neighboring cell is determined based on the latitude location information of the neighboring cell and a threshold.

In this implementation, compared with existing configuration information of the neighboring cell, in addition to the neighboring cell identifier information and the neighboring cell relation information, the latitude location information of the neighboring cell is further included, to be specific, neighboring cell list update and configuration triggered based on the latitude location are newly defined. In this way, frequency of updating the neighboring cell relation can be reduced, and frequent addition and removal operations of a neighboring cell can be avoided.

In a possible implementation, that the terminal device performs the mobility management based on the first information includes: The terminal device determines the latitude location of the terminal device based on a global navigation satellite system GNSS. The terminal device performs the mobility management when determining that the latitude location and a threshold meet the handover condition.

In this implementation, the terminal device may determine whether the latitude location of the terminal device and the latitude threshold delivered by a network device side meet a specified handover condition, to accurately perform the mobility management. In this way, efficiency of the mobility management, for example, cell handover and/or reselection, can be improved, and system signaling overheads can also be reduced.

In a possible implementation, that the terminal device performs the mobility management based on the first information includes: The terminal device performs the mobility management based on the index information of the beam position and the handover indication information. Alternatively, the terminal device performs the mobility management based on the index information of the beam position, the handover indication information, and the information about the second timer. Alternatively, the terminal device performs the mobility management based on the location information of the reference point of the beam position and the latitude location of the terminal device. Alternatively, the terminal device performs the mobility management based on the location information of the reference point of the beam position, the latitude location of the terminal device, and the information about the second timer.

In this implementation, the terminal device may directly perform the mobility management based on the index information of the beam position and the handover indication information that are delivered by the network device side, so that the efficiency of the mobility management can be improved. For example, the terminal device performs cell handover/reselection. This manner can improve a success rate of the cell handover/reselection. In an optional implementation, after receiving the index information of the beam position, the handover indication information, and the information about the second timer, the terminal device performs the mobility management as required after a period of time. In addition, the terminal device may further determine whether a delivered location of the reference point of the beam position is consistent with the latitude location of the terminal device, to accurately and flexibly perform the mobility management. In this way, the efficiency of the mobility management can be improved, and additional signaling overheads can also be avoided.

In a possible implementation, the first information is at least one of the following: downlink control information DCI, medium access control MAC-CE information, a system information block SIBx, and radio resource control RRC information.

In this implementation, the network device may include the handover condition, the information about the first timer, the frequency information, the polarization information, the beam information, and the serving cell information in at least one of the foregoing information, and deliver the at least one of the foregoing information to the terminal device, to reduce the additional signaling overheads as much as possible.

According to a second aspect, an embodiment of this application provides a communication method. The method may be performed by a processor of a network device, or may be performed by a chip corresponding to the processor. This is not limited herein. Specifically, the following steps are included. The network device determines first information of a terminal device, where the first information is used for mobility management of ascending-orbit and descending-orbit cells, and the first information is related to a latitude location. The network device sends the first information to the terminal device.

The network device sends the first information to the terminal device. Because the first information is used for the mobility management of the ascending-orbit and descending-orbit cells, and the first information is related to the latitude location, in a scenario of ascending-orbit and descending-orbit cells in a satellite network, the terminal device can accurately perform the mobility management based on the first information, and does not need to frequently perform the mobility management with frequency switching of ascending and descending orbits. In this way, efficiency of the mobility management can be improved, and signaling overheads caused by frequent mobility management can also be reduced.

In a possible implementation, the first information includes at least one of the following: a handover condition, information about a first timer, frequency information, and polarization information.

In a possible implementation, the handover condition is determined based on the latitude location of the terminal device.

In a possible implementation, the first information includes beam position information. The beam position information includes at least one of the following: index information of a beam position, location information of a reference point of the beam position, handover indication information, and information about a second timer.

In a possible implementation, the first information includes serving cell information. The serving cell information includes information about a neighboring cell. The information about the neighboring cell includes first request information. The first request information is used to request ascending-orbit or descending-orbit type information of the neighboring cell.

In a possible implementation, configuration information of the neighboring cell includes neighboring cell identifier information, neighboring cell relation information, and latitude location information of the neighboring cell. Whether the neighboring cell is an activated cell is determined based on the latitude location information of the neighboring cell and a threshold.

In a possible implementation, the first information is at least one of the following: downlink control information DCI, medium access control MAC-CE information, a system information block SIBx, and radio resource control RRC information.

It should be noted that the second aspect is a peer aspect of the first aspect. Therefore, for effects of the possible implementations of the second aspect, refer to effects of the possible implementations of the first aspect. Details are not described herein again.

According to a third aspect, this application further provides a terminal device. The terminal device may include a transceiver unit and a processing unit.

The transceiver unit is configured to obtain first information, where the first information is used for mobility management of ascending-orbit and descending-orbit cells, and the first information is related to a latitude location. The processing unit is configured to perform the mobility management based on the first information.

In a possible implementation, the first information includes at least one of the following: a handover condition, information about a first timer, frequency information, and polarization information.

It should be noted that the handover condition may include a plurality of threshold values, for example, a latitude threshold value and a longitude threshold value. When the terminal device determines that the handover condition is met, the mobility management, for example, cell handover, may be performed. The frequency information may include frequency information and frequency priority information of a cell accessed by the terminal device. The polarization information may specifically include one or more of linear polarization information, left-hand circular polarization information, right-hand circular polarization information, and elliptical polarization information.

In a possible implementation, the handover condition is determined based on the latitude location of the terminal device.

In a possible implementation, the first information includes beam position information. The beam position information includes at least one of the following: index information of a beam position, location information of a reference point of the beam position, handover indication information, and information about a second timer.

In a possible implementation, the first information includes serving cell information. The serving cell information includes information about a neighboring cell. The information about the neighboring cell includes first request information. The first request information is used to request ascending-orbit or descending-orbit type information of the neighboring cell.

In a possible implementation, the processing unit is further configured to: determine type information of an accessed cell based on the serving cell information, and switch to use configuration information of a neighboring cell of a same type based on the type information of the accessed cell; or determine frequency information of the accessed cell based on the frequency information, and switch to use configuration information of a neighboring cell of a same frequency based on the frequency information of the cell accessed by the terminal device.

In a possible implementation, configuration information of the neighboring cell includes neighboring cell identifier information, neighboring cell relation information, and latitude location information of the neighboring cell. Whether the neighboring cell is an activated neighboring cell is determined based on the latitude location information of the neighboring cell and a threshold.

In a possible implementation, when performing the mobility management based on the first information, the processing unit is specifically configured to: determine the latitude location based on a global navigation satellite system GNSS; and perform the mobility management when determining that the latitude location and a threshold meet the handover condition.

In a possible implementation, when performing the mobility management based on the first information, the processing unit is specifically configured to: perform the mobility management based on the index information of the beam position and the handover indication information; perform the mobility management based on the index information of the beam position, the handover indication information, and the information about the second timer; perform the mobility management based on the location information of the reference point of the beam position and the latitude location of the terminal device; or perform the mobility management based on the location information of the reference point of the beam position, the latitude location of the terminal device, and the information about the second timer.

In a possible implementation, the first information is at least one of the following: downlink control information DCI, medium access control MAC-CE information, a system information block SIBx, and radio resource control RRC information.

According to a fourth aspect, this application further provides a network device. The network device may include a transceiver unit and a processing unit.

The processing unit is configured to determine first information of a terminal device, where the first information is used for mobility management of ascending-orbit and descending-orbit cells, and the first information is related to a latitude location. The transceiver unit is configured to send the first information to the terminal device.

In a possible implementation, the first information includes at least one of the following: a handover condition, information about a first timer, frequency information, and polarization information.

In a possible implementation, the handover condition is determined based on the latitude location.

In a possible implementation, the first information includes beam position information. The beam position information includes at least one of the following: index information of a beam position, location information of a reference point of the beam position, handover indication information, and information about a second timer.

In a possible implementation, the first information includes serving cell information. The serving cell information includes information about a neighboring cell. The information about the neighboring cell includes first request information. The first request information is used to request ascending-orbit or descending-orbit type information of the neighboring cell.

In a possible implementation, configuration information of the neighboring cell includes neighboring cell identifier information, neighboring cell relation information, and latitude location information of the neighboring cell. Whether the neighboring cell is an activated cell is determined based on the latitude location information of the neighboring cell and a threshold.

In a possible implementation, the first information is at least one of the following: downlink control information DCI, medium access control MAC-CE information, a system information block SIBx, and radio resource control RRC information.

According to a fifth aspect, an embodiment of this application provides a communication apparatus. The communication apparatus includes a processor coupled to a memory. The memory stores a computer program or computer instructions. The processor is configured to invoke and run the computer program or the computer instructions stored in the memory, to enable the processor to implement any one of the first aspect or the possible implementations of the first aspect, or enable the processor to implement any one of the second aspect or the possible implementations of the second aspect.

Optionally, the communication apparatus further includes the foregoing memory. Optionally, the memory is integrated with the processor.

Optionally, the communication apparatus further includes a transceiver. The processor is configured to control the transceiver to receive and send a signal, information, data, and/or the like.

According to a sixth aspect, an embodiment of this application provides a communication apparatus. The communication apparatus includes a processor. The processor is configured to invoke a computer program or computer instructions in a memory, to enable the processor to implement any one of the first aspect or the possible implementations of the first aspect. Alternatively, the processor is configured to perform any one of the second aspect or the possible implementations of the second aspect.

The communication apparatus further includes a transceiver. The processor is configured to control the transceiver to receive and send a signal, information, data, and/or the like.

According to a seventh aspect, an embodiment of this application provides a communication apparatus. The communication apparatus includes a processor. The processor is configured to perform any one of the first aspect or the possible implementations of the first aspect, or the processor is configured to perform any one of the second aspect or the possible implementations of the second aspect.

According to an eighth aspect, an embodiment of this application further provides a computer program product including instructions. When the computer program product runs on a computer, the computer is enabled to perform any one of the first aspect or the possible implementations of the first aspect, or the computer is enabled to perform any one of the second aspect or the possible implementations of the second aspect.

According to a ninth aspect, an embodiment of this application further provides a computer-readable storage medium, including computer instructions. When the instructions are run on a computer, the computer is enabled to perform any one of the first aspect or the possible implementations of the first aspect, or the computer is enabled to perform any one of the second aspect or the possible implementations of the second aspect.

According to a tenth aspect, an embodiment of this application further provides a chip apparatus, including a processor, configured to invoke a computer program or computer instructions in a memory, to enable the processor to perform any one of the first aspect or the possible implementations of the first aspect, or enable the processor to perform any one of the second aspect or the possible implementations of the second aspect.

Optionally, the processor is coupled to the memory through an interface.

For technical effects that can be achieved in any one of the third aspect to the tenth aspect and the possible designs, refer to descriptions of technical effects that can be achieved in any one of the possible implementations in the first aspect or the second aspect. Details are not described herein again.

### BRIEF DESCRIPTION OF DRAWINGS

FIG. 1 is a specific example diagram of a beam hopping communication technology according to an embodiment of this application;
FIG. 2 shows a communication system to which a communication method is applicable according to an embodiment of this application;
FIG. 3 is a schematic flowchart of a communication method according to an embodiment of this application;
FIG. 4 is a diagram of an automatic neighboring cell relation according to an embodiment of this application;
FIG. 5 is a schematic flowchart of performing neighboring cell measurement by a terminal device according to an embodiment of this application;
FIG. 6 is a diagram of a structure of a communication apparatus according to an embodiment of this application;
FIG. 7 is another diagram of a structure of a communication apparatus according to an embodiment of this application; and
FIG. 8 is a simplified diagram of a structure of a chip according to an embodiment of this application.

### DESCRIPTION OF EMBODIMENTS

Embodiments of this application provide a communication method and apparatus. The method and the apparatus are based on a same or similar technical concept. Because the method and the apparatus have similar problem-resolving principles, mutual reference may be made to implementations of the apparatus and the method. Repeated parts are not described again.

To facilitate understanding of the technical solutions in embodiments of this application, the following first briefly describes an existing non-terrestrial communication network.

A non-terrestrial communication network (non-terrestrial network, NTN) includes nodes such as a satellite network, a high altitude platform, and an uncrewed aerial vehicle. Because of features such as a long communication distance, wide coverage, flexible networking, and being not limited by a geographical condition and a ground device condition, the non-terrestrial network is widely used in a plurality of fields such as maritime communication, positioning and navigation, disaster relief, scientific experiments, video broadcasting, and earth observation.

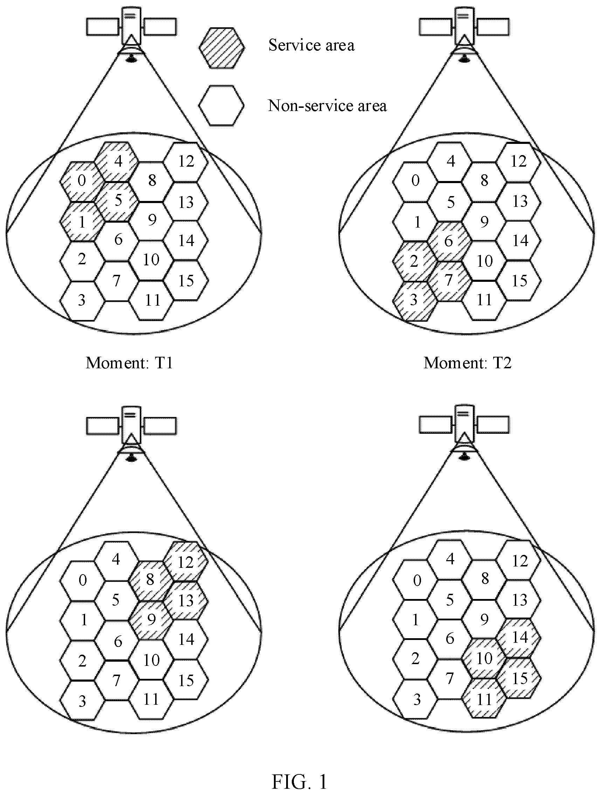

The satellite network is an important part of the NTN. As a next generation satellite network continuously tends to be ultra-dense and heterogeneous generally, the satellite network finally develops to a starlink (Starlink) ultra-dense low earth orbit (low earth orbit, LEO) satellite constellation. Functions of the satellite network also tend to be complex and diversified. In addition, because coverage of a single satellite is very wide, and coverage of a single beam is the smallest, to support wide-area coverage, hundreds or even thousands of beams usually needs to be configured for the single satellite. This particularly causes overload of the LEO satellite. Therefore, to alleviate a contradiction between low load of the single satellite and wide coverage, a beam hopping satellite communication system emerges correspondingly. Specifically, in the beam hopping satellite system, only a few beams (for example, tens of beams) are configured for the single satellite, and the beams may serve all coverage areas (divided into beam positions) of the single satellite in a time division manner. Refer to FIG. 1. A satellite can form only four beams at a same moment. At a moment T1, four beams 0, 1, 4, and 5 are used to cover areas (that is, beam positions) corresponding to the beams. At a moment T2, four beams 2, 3, 6, and 7 are used to cover areas corresponding to the beams. By analogy, all areas (that is, areas corresponding to 16 beams) covered by the single satellite are served in a time division manner of T1, T2, T3, and T4.

The foregoing inclined orbit LEO constellation mainly includes an ascending-orbit satellite and a descending-orbit satellite, and forms multiple coverage on the ground. In addition, in the LEO constellation, a frequency division manner of ascending and descending orbits is usually used to avoid communication interference. For example, the ascending-orbit satellite uses a frequency f1, and the descending-orbit satellite uses a frequency f2. However, at an ascending and descending orbit switching point (that is, in a high-latitude area), the satellite needs to perform frequency/polarization switching (that is, a frequency switching problem of the ascending and descending orbits exists). In this case, a terminal device within coverage of the satellite needs to be forced to perform cell handover/reselection. Usually, an orbit periodicity is 90 minutes, and frequency switching is performed at least twice per orbit periodicity (to be specific, switching from the ascending orbit to the descending orbit and switching from the descending orbit to the ascending orbit are performed). In addition, it is usually difficult to establish an inter-satellite link (inter-satellite link, ISL) between the ascending-orbit satellite and the descending-orbit satellite due to a high moving speed, and it takes long time (usually hundreds of milliseconds or even longer) to exchange information.

In an existing new radio (new radio, NR) cell reselection mechanism, in an NTN scenario, because a near-far effect is not definite, signal quality at a cell center and signal quality at a cell edge are usually slightly different, and cell reselection triggered only based on the signal quality is inefficient. Therefore, location information is further added to the NTN (where, for example, a neighboring cell ephemeris or a location reference point is broadcast), to assist in cell reselection. However, the cell reselection caused by the foregoing frequency switching of the ascending and descending orbits is a type of special event triggered by a network. Therefore, the existing NR/NTN reselection mechanism has low working efficiency in a scenario of frequency reselection/switching of the ascending and descending orbits, or a system message (for example, reference point location information) needs to be dynamically configured and frequently updated.

In addition, in an existing NR cell handover mechanism, cell handover is mainly triggered based on a signal quality change. Due to high dynamicity (such as 7.5 km/s) of a satellite node, the following manners are added to assist in NTN cell handover: (1) Handover is triggered based on time or a timer timer. (2) Handover is triggered based on a location. To be specific, a distance between the terminal device and a reference point of a source cell is greater than a first threshold, and a distance between the terminal device and a reference point of a target cell is less than a second threshold. (3) Handover is triggered based on a combination of a timer/location and signal quality. In addition, only addition and removal operations of a neighboring cell are defined in an NR/NTN automatic neighboring cell relation ANR configuration. Therefore, in an NTN scenario, especially in a high-latitude area and a satellite-to-ground convergence scenario, neighboring cells are periodically added and removed. As a result, a neighboring cell relation needs to be frequently updated, and system signaling overheads are high.

A mobility management mechanism of an existing 5th generation (5th Generation, 5G) new radio (new radio, NR)/NTN cell is applied to ascending-orbit and descending-orbit cells. It is clear that, efficiency is not high. For example, a success rate of cell handover/reselection is not high, and a system message (for example, a cell-specific timer cell-specific Timer) needs to be frequently updated and dynamically configured, resulting in high system overheads.

Therefore, this application provides a communication method. The method includes: A terminal device obtains first information, where the first information is used for mobility management of ascending-orbit and descending-orbit cells, and the first information is related to a latitude location. The terminal device performs the mobility management based on the first information. According to the method, in a scenario of ascending-orbit and descending-orbit cells in a satellite network, mobility management does not need to be frequently performed with frequency switching of ascending and descending orbits. In this way, efficiency of the mobility management of the terminal device can be improved, and system signaling overheads can also be reduced.

The communication method provided in embodiments of this application may be applied to various communication systems such as a non-terrestrial network NTN system including a satellite communication system, a high altitude platform (high altitude platform station, HAPS) communication system, an uncrewed aerial vehicle, and the like, an integrated communication and navigation (integrated communication and navigation, IcaN) system, a global navigation satellite system (global navigation satellite system, GNSS), and an ultra-dense low-orbit satellite communication system. The satellite communication system may be integrated with a conventional mobile communication system. The communication system may further include: an internet of things (internet of things, IoT) system, a narrowband internet of things (narrowband internet of things, NB-IoT) system, a worldwide interoperability for microwave access (worldwide interoperability for microwave access, WiMAX) communication system, a global system for mobile communications (global system for mobile communications, GSM), an enhanced data rate for GSM evolution (enhanced data rate for GSM evolution, EDGE) system, a wideband code division multiple access (wideband code division multiple access, WCDMA) system, a code division multiple access 2000 (code division multiple access, CDMA2000) system, a time division-synchronous code division multiple access (time division-synchronization code division multiple access, TD-SCDMA) system, a long term evolution (long term evolution, LTE) system, a 5th generation (5G) communication system, such as 5G new radio (new radio, NR) and three application scenarios of a 5G mobile communication system: enhanced mobile broadband (enhanced mobile broadband, eMBB), ultra-reliable low latency communication (ultra-reliable low latency communications, uRLLC), and massive machine type communication (massive machine type communication, mMTC), a device-to-device (device-to-device, D2D) communication system, a machine-to-machine (machine-to-machine, M2M) communication system, an internet of vehicles communication system, or another or a future communication system. This is not specifically limited in this embodiment of this application.

The satellite communication system in this application includes a transparent transmission satellite architecture and a non-transparent transmission satellite architecture. Transparent transmission is also referred to as bent-pipe forwarding and transmission. To be specific, only processes such as frequency conversion and signal amplification are performed on a signal on a satellite. The satellite is transparent to the signal, as if the satellite does not exist. Non-transparent transmission is also referred to as regenerative (on-board access/processing) transmission. To be specific, the satellite has some or all of functions of a base station.

The satellite communication system includes a user equipment and a network device. The user equipment may also be referred to as a user terminal, a mobile station, or the like. The network device may include one or more satellites and one or more ground station devices. The ground station device may also be referred to as a core network device. The satellite may be a low earth orbit (low earth orbit, LEO) satellite, a non-geostationary orbit (non-geostationary earth orbit, NGEO) satellite, or the like.

The following describes the terminal device and the network device in this application.

The terminal device includes various handheld devices, vehicle-mounted devices, wearable devices, or computing devices that have a wireless communication function, or other processing devices connected to a wireless modem, and may be specifically a user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal device may alternatively be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device or wearable device, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in a 5G network or a future communication network, or the like.

The ground station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and so on. The CN may further include network elements such as an access and mobility management network element (access and mobility management function, AMF), a session management network element (session management function, SMF), an authentication server network element (authentication server function, AUSF), a policy control node (policy control function, PCF), and a user plane function (user plane function, UPF) network element. The AMF network element is configured to manage access and mobility of the UE, and is mainly responsible for functions such as UE authentication, UE mobility management, and UE paging.

The network device may further include but is not limited to: an evolved NodeB (evolved NodeB, eNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission reception point (transmission reception point, TRP), or the like. Alternatively, the network device may be a gNB, a TRP, or a TP in a 5G system, or one antenna panel or one group of antenna panels (including a plurality of antenna panels) of a base station in a 5G system. In addition, the network device may alternatively be a network node that forms a gNB or a TP, for example, a BBU or a distributed unit (distributed unit, DU). Alternatively, the network device may be a device responsible for a network side function in a device-to-device (device-to-device, D2D) communication system, a machine-to-machine (machine-to-machine, M2M) communication system, an internet of things (Internet of Things, IoT) communication system, an internet of vehicles communication system, or another communication system.

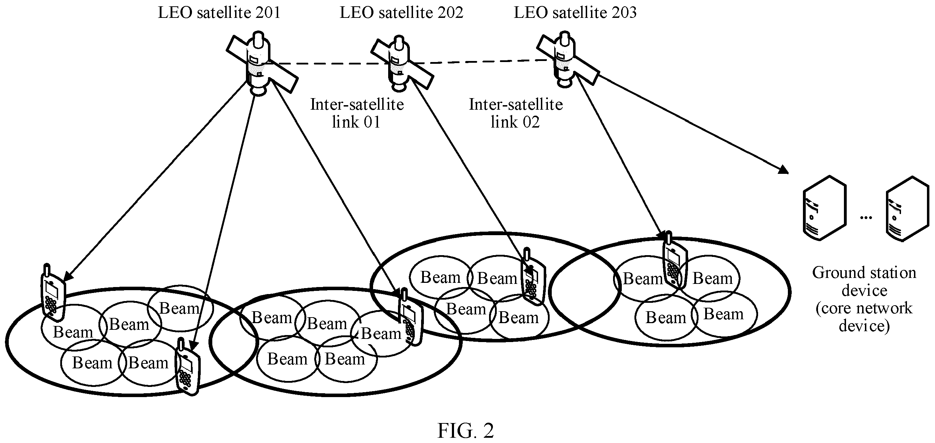

To facilitate understanding of the technical solutions in embodiments of this application, the following shows, with reference to FIG. 2, a possible communication system to which a communication method is applicable according to an embodiment of this application.

FIG. 2 is a diagram of a satellite communication system according to this application. As shown in FIG. 2, the communication system includes a satellite 201, a satellite 202, and a satellite 203. The satellite 201 is connected to the satellite 202 through an inter-satellite link 01. The satellite 202 is connected to the satellite 203 through an inter-satellite link 02. The satellite 203 is connected to a ground station device (for example, a core network device). Each satellite may provide a communication service, a navigation service, a positioning service, and the like for a terminal device by using a plurality of beams. The satellite in this scenario is a LEO satellite. The satellite 201 and the satellite 202 each have a non-transparent transmission satellite architecture, and the satellite 203 has a transparent transmission satellite architecture.

The satellite uses a plurality of beams to cover a service area. Different beams may be used to perform communication through one or more of time division, frequency division, and space division. The satellite performs wireless communication with the terminal device by using a broadcast communication signal, a navigation signal, and the like. The satellite may perform wireless communication with the ground station device. The satellite mentioned in embodiments of this application may be a satellite base station, may include an orbit receiver or a repeater configured to forward information, or may be a network side device mounted on the satellite.

The communication method provided in embodiments of this application is mainly applied to a wireless communication network such as 5G and satellite communication, and may be further applied to another wireless communication network scenario. A communication process may occur between a network device and a terminal device.

To facilitate understanding of the technical solutions in this application, the following describes some technical terms in this application.

### (1) Mobility management

In a mobile communication system, a mobile terminal device does not have a fixed connection point. This connection point is dynamic and changes as the terminal device continues to move. Therefore, in mobile communication, a dynamic (mobile) terminal device forms a dynamic communication link through dynamic connection points. Implementation of a "mobile service" based on "dynamicity" is one of core technologies to implement a mobile network. Therefore, the mobility management in embodiments of this application is management of location information, security, and service continuity of a mobile terminal, and strives to enable a status of contact between the terminal and a network to become optimal, to ensure application of various network services.

Usually, the mobility management may be mainly classified into mobility management in connected mode and mobility management in idle mode. Specifically, the mobility management may include cell selection and location registration, cell reselection and user roaming, cell handover (intra-frequency handover, inter-frequency handover, and inter-RAT handover), neighboring cell management, and the like.

### (2) Beam position information

The beam position information in embodiments of this application is information related to a beam position, and may include location information of a reference point of a beam, index information of the beam, and the like. The reference point of the beam may be usually a central position of an area covered by a beam.

(3) "A plurality of' in embodiments of this application refers to "two or more". The term "and/or" describes an association relationship between associated objects, and indicates that three relationships may exist. For example, A and/or B may indicate the following cases: Only A exists, both A and B exist, and only B exists. The character "/" usually indicates an "or" relationship between the associated objects. In addition, it should be understood that in descriptions of this application, terms such as "first" and "second" are merely used for distinguishing and description, but should not be understood as indicating or implying relative importance, or should not be understood as indicating or implying a sequence.

(4) The terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device. It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The following describes the technical solutions of this application with reference to specific embodiments.

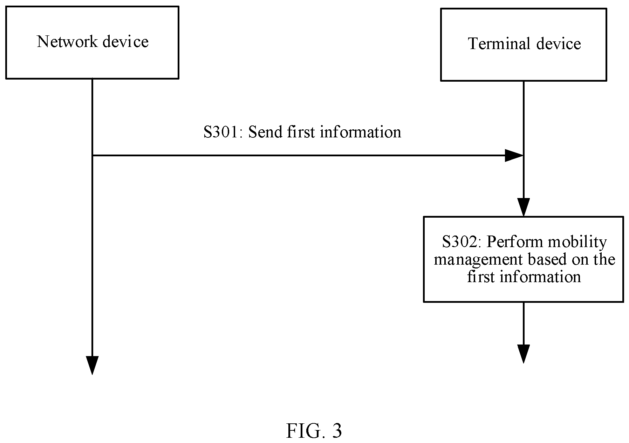

FIG. 3 is a schematic flowchart of a communication method according to an embodiment of this application. The communication method may be performed by a transceiver and/or a processor of a network device (a terminal device), or may be performed by a chip corresponding to the transceiver and/or the processor. Alternatively, this embodiment may be implemented by a controller or a control device connected to the network device (the terminal device). The controller or the control device is configured to manage at least one network device including the network device. In addition, a form of a specific apparatus for performing this embodiment is not specifically limited in this application. In addition, during actual application, in this embodiment of this application, the network device may manage a plurality of terminal devices. Therefore, for each of the plurality of terminal devices managed by the network device, refer to the following steps S301 and S302 in which the terminal device communicates with the network device.

Refer to FIG. 3. A specific procedure of the method is as follows:

S301: The network device sends first information to the terminal device, where the first information is used for mobility management of ascending-orbit and descending-orbit cells, and the first information is related to a latitude location.

Correspondingly, the terminal device obtains the first information.

Specifically, the terminal device may receive the first information from the network device; or the network device sends the first information to a third-party device, and the terminal device obtains the first information from the third-party device. Therefore, a manner in which the terminal device obtains the first information is not specifically limited in this embodiment of this application.

In an implementation, before performing step S301, the network device determines the first information of the terminal device. It should be understood that the terminal device is located in a service area covered by a beam of the network device.

Optionally, the first information is at least one of the following: downlink control information (downlink control information, DCI), medium access control (medium access control, MAC) control element (control element, CE) information, a system information block (system information block, SIBx), and radio resource control (radio resource control, RRC) information.

In an implementation, the first information includes at least one of the following: a handover condition, information about a first timer, frequency information, and polarization information. The handover condition is determined based on the latitude location of the terminal device.

For example, a network device side may define a case in which the handover condition includes one or more of a first handover condition X1, a second handover condition X2, and a third handover condition X3.

The first handover condition X1 is that the latitude location of the terminal device is greater than a first threshold (a first threshold value), or the latitude location of the terminal device is less than the first threshold, or an absolute value of the latitude location of the terminal device is greater than the first threshold.

The second handover condition X2 is that the latitude location of the terminal device is greater than a second threshold (a second threshold value) and less than a third threshold (a third threshold value).

The third handover condition X3 is that a longitude location of the terminal device is greater than a fourth threshold (a fourth threshold value) and less than a fifth threshold (a fifth threshold value), and (&&) the latitude location of the terminal device is greater than a sixth threshold (a sixth threshold value) and less than a seventh threshold (a seventh threshold value).

It should be noted that the sixth threshold and the second threshold may be the same or may be different, and the seventh threshold and the third threshold may be the same or may be different. This is specifically set based on an actual status. This is not limited in this application. Thresholds included in the configuration information are the plurality of thresholds in the foregoing example.

It should be noted that the information included in the first information may belong to configuration information of a cell. Therefore, the first information may further include a cell identity (identity document, ID), a broadcast beam frequency, available bandwidth of the cell, a bandwidth part (bandwidth part, BWP) configuration manner, and the like.

In addition, the thresholds usually include a latitude threshold value and a longitude threshold value. The information about the first timer includes specified duration information or specified moment information. To be specific, when the latitude location of the terminal device meets the handover condition, it is required that the mobility management starts to be performed only after specified duration is exceeded or a specified moment is reached. The frequency information may include frequency information and frequency priority information of a cell accessed by the terminal device. The polarization information may specifically include polarization information of the terminal device, and specifically include one or more of linear polarization information, left-hand circular polarization (left-hand circular polarization, LHCP) information, right-hand circular polarization (right-hand circular polarization, RHCP) information, and elliptical polarization information.

In an implementation, the first information includes beam position information. The beam position information includes at least one of the following: index information of a beam position, location information of a reference point of the beam position, handover indication information, and information about a second timer.

It should be noted that the beam position information implicitly includes longitude location information and latitude location information of the terminal device to some extent. The location information of the reference point of the beam position usually includes longitude location information and latitude location information of a center point of the beam. The handover indication information indicates the terminal device to perform the mobility management, for example, indicates the terminal device to perform cell handover. The information about the second timer includes specified duration information or specified moment information. To be specific, when the terminal device determines that the mobility management is to be performed, the mobility management starts to be performed only after specified duration is required to be reached or a specified moment is required to be reached.

In an implementation, the first information includes serving cell information. The serving cell information includes information about a neighboring cell. The information about the neighboring cell includes first request information. The first request information is used to request ascending-orbit or descending-orbit type information of the neighboring cell.

Configuration information of the neighboring cell includes neighboring cell identifier information, neighboring cell relation information, and latitude location information of the neighboring cell. Whether the neighboring cell is an activated neighboring cell is determined based on the latitude location information of the neighboring cell and a threshold.

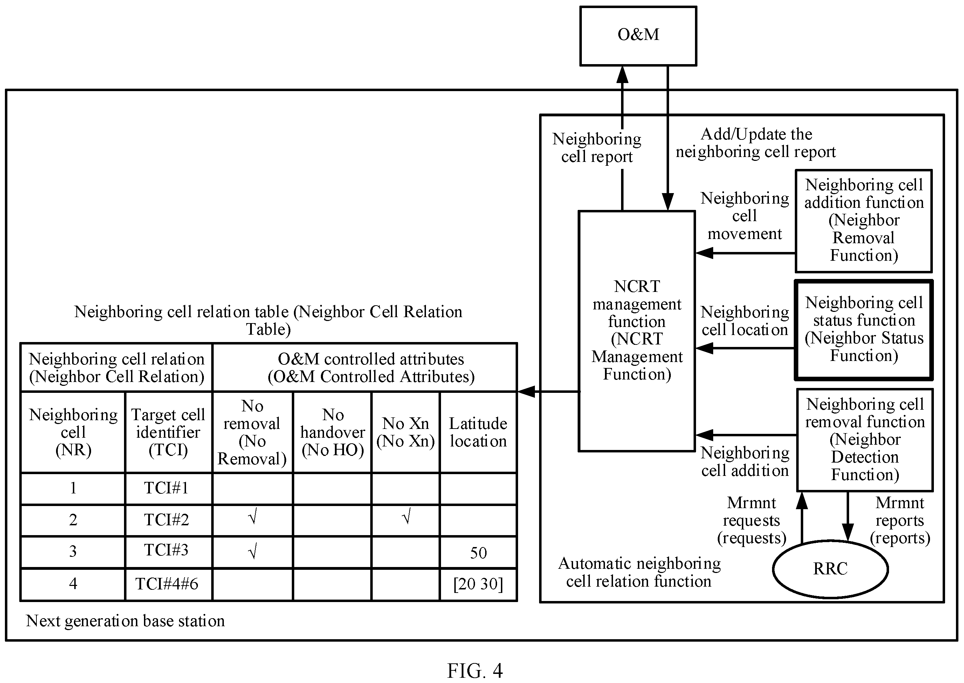

For example, an existing NR automatic neighboring cell relation ANR includes only functions of addition and removal operations of a neighboring cell. Therefore, a neighboring cell relation table includes the neighboring cell relation information (a neighboring cell sequence number and a target cell identifier) and information about O&M controlled attributes. An ANR function allows O&M to manage the neighboring cell relation table. To be specific, the O&M can add or remove a neighboring cell relation (Neighbor Relation, NR) and change an attribute value in the neighboring cell relation table. The O&M is informed of a change in the neighboring cell relation table. For content of the existing automatic neighboring cell relation ANR table, refer to the current technology. Details are not described herein. Refer to FIG. 4. In this embodiment of this application, a status function of a neighboring cell is added to the existing NR automatic neighboring cell relation ANR. Therefore, latitude location information of the neighboring cell is correspondingly added to the existing neighboring cell relation table.

In addition, in this embodiment of this application, the newly defined latitude location information may be used to trigger neighboring cell list update and configuration, that is, whether the neighboring cell is an activated neighboring cell may be determined based on the latitude location information.

Specifically, when an absolute value of a latitude location of a satellite/cell is greater than or equal to a specified threshold, a neighboring cell served by the satellite/a neighboring cell is activated. When an absolute value of a latitude location of a satellite/cell is less than a specified threshold, a neighboring cell served by the satellite/a neighboring cell is not activated. Alternatively, when an absolute value of a latitude location of a satellite/cell is greater than or equal to a specified threshold, a neighboring cell served by the satellite/a neighboring cell is not activated. When an absolute value of a latitude location of a satellite/cell is less than a specified threshold, a neighboring cell served by the satellite/a neighboring cell is activated.

Refer to the neighboring cell relation table in FIG. 4. For example, for a neighboring cell of TCI#3, when an absolute value of a latitude location of the neighboring cell of TCI#3 is greater than or equal to 50 degrees, the neighboring cell of TCI#3 is activated (or not activated); or when an absolute value of a latitude location of the neighboring cell of TCI#3 is less than 50 degrees, the neighboring cell of TCI#3 is not activated (or activated).

It should be noted that the specified threshold may be a latitude value, or may be a latitude range. For example, the specified threshold is from X1 degrees to X2 degrees north latitude, or from Y1 degrees to Y2 degrees south latitude. In addition, a cell sequence number may correspond to one or more neighboring cells. For example, a sequence number 4 in FIG. 4 corresponds to TCI#3 and TCI#6 (TCI#N).

In an implementation, to support inter-frequency (including a frequency and a polarization manner) networking of ascending and descending orbits, the ascending-orbit and descending-orbit cells need to be dynamically configured. Therefore, dynamic configuration of the ascending-orbit and descending-orbit cells may be implemented in the following manner.

A satellite/cell may use a plurality of types of configuration. For example, an ascending-orbit cell correspondingly uses first cell configuration, and a descending-orbit cell correspondingly uses second cell configuration. Cell configuration information includes a cell identifier ID, a broadcast beam frequency, polarization, available bandwidth of the cell, a BWP configuration manner, and the like. When the satellite passes an ascending and descending orbit switching point (that is, switches from the ascending orbit to the descending orbit or switches from the descending orbit to the ascending orbit), the cell configuration changes.

For example, for single-satellite single-cell configuration, a satellite 1 uses cell X configuration during an ascending orbit phase, and uses cell Y configuration during a descending orbit phase. That is, for single-satellite multi-cell configuration, the satellite 1 may use cell X1 configuration, cell X2 configuration, and cell Xm configuration during the ascending orbit phase, and the satellite 1 may use cell Y1 configuration, cell Y2 configuration, and cell Yn configuration during the descending orbit phase.

Information about the ascending and descending orbit switching point (for example, latitude information, time, or a timer) and the like need to be transferred through an NG interface or an Xn interface, and are configured by a network for a corresponding cell. An information element format includes one or more of time, a timer, location information (for example, a longitude location and a latitude location), a configuration index, and cell configuration information.

It should be understood that a next generation (next generation, NG) interface is simply explained as an interface between a radio access network and a 5G core network, and an Xn interface is a network interface between a next generation radio access network (NG-radio access network, NG-RAN) node (a gNB or an ng-eNB).

S302: The terminal device performs the mobility management based on the first information.

When step S302 is performed, the following two implementations may be specifically included, but this not limited thereto.

In an implementation, the first information includes at least one of the following: a handover condition, information about a first timer, frequency information, and polarization information.

That the terminal device performs the mobility management based on the first information includes the following: The terminal device determines the latitude location of the terminal device based on a global navigation satellite system GNSS. Further, the terminal device performs the mobility management when determining that the latitude location and a threshold meet the handover condition.

Refer to the handover condition defined in step S301. For example, the terminal device may first obtain the latitude location and the longitude location of the terminal device through the global navigation satellite system GNSS. Further, the terminal device determines a latitude threshold from thresholds included in the first information, and then determines whether the latitude location of the terminal device and the latitude threshold meet the first handover condition or the second handover condition. Alternatively, the terminal device determines a longitude threshold and a latitude threshold from thresholds included in the first information, and then determines whether a longitude location and the latitude location of the terminal device and the longitude threshold and the latitude threshold meet the third handover condition. If the handover condition is not met, the terminal device may not perform the mobility management. If the handover condition is met, the terminal device may perform the mobility management. For example, the terminal device directly initiates corresponding cell handover/reselection, or the terminal device sends a corresponding measurement report to the network device, and the network device initiates handover/reselection.

It should be noted that, when the terminal device meets the foregoing handover condition, the terminal device may perform the mobility management after specified duration or at a specified moment based on the information about the first timer.

In another implementation, the first information includes beam position information. The beam position information includes at least one of the following: index information of a beam position, location information of a reference point of the beam position, handover indication information, and information about a second timer. That the terminal device performs the mobility management based on the first information includes the following specific manners.

Manner 1: The terminal device performs the mobility management based on the index information of the beam position and the handover indication information.

For example, usually the handover indication information is 1-bit (bit) indication information. If a value corresponding to the 1-bit indication information is 0, it indicates that the beam position is not an ascending and descending orbit switching beam position, that is, the mobility management is not performed. If a value corresponding to the 1-bit indication information is 1, it indicates that the beam position is an ascending and descending orbit switching beam position, that is, the mobility management is performed.

Optionally, the terminal device performs the mobility management based on the index information of the beam position, the handover indication information, and the information about the second timer. To be specific, when the terminal device determines, based on the index information of the beam position and the handover indication information, to perform the mobility management, the terminal device starts to perform the mobility management after a period of time based on the second timer.

Manner 2: The terminal device performs the mobility management based on the location information of the reference point of the beam position and the latitude location of the terminal device.

It should be noted that, in the manner 2, the terminal device may obtain the latitude location and the longitude location of the terminal device based on the GNSS. Because the location information of the reference point of the beam position correspondingly indicates the longitude location and the latitude location of the terminal device, the terminal device may determine whether the latitude location of the terminal device is consistent with a location of the reference point of the beam position. If the latitude location of the terminal device is consistent with the location of the reference point of the beam position, the terminal device does not perform the mobility management. If the latitude location of the terminal device is inconsistent with the location of the reference point of the beam position, the terminal device performs the mobility management. Optionally, the terminal device may determine whether to perform the mobility management by determining whether the longitude location and the latitude location of the terminal device are consistent with the location of the reference point of the beam position. This is not limited in this application.

Optionally, the terminal device performs the mobility management based on the location information of the reference point of the beam position, the latitude location of the terminal device, and the information about the second timer. To be specific, when the terminal device determines, based on the location information of the reference point of the beam position and the latitude location of the terminal device, to perform the mobility management, the terminal device starts to perform the mobility management after a period of time based on the second timer.

It should be understood that the mobility management performed by the terminal device includes cell handover, cell reselection, neighboring cell information configuration, and the like. This is not specifically limited in this application, and may be selected based on an actual requirement.

In the foregoing two implementations, in a scenario of frequency switching/reselection of the ascending and descending orbits, the terminal device may accurately perform the mobility management based on the first information. In this way, efficiency of the mobility management of the terminal device, for example, a success rate of cell handover/reselection, can be improved, and system signaling overheads can also be reduced.

When the terminal device receives the first information, the first information includes serving cell information. The serving cell information includes information about a neighboring cell. The information about the neighboring cell includes first request information. The first request information is used to request ascending-orbit or descending-orbit type information of the neighboring cell. The method further includes: The terminal device performs neighboring cell measurement, to obtain an ascending-orbit or descending-orbit type information of a neighboring cell. Further, the terminal device reports the ascending-orbit or descending-orbit type information of the neighboring cell to the network device.

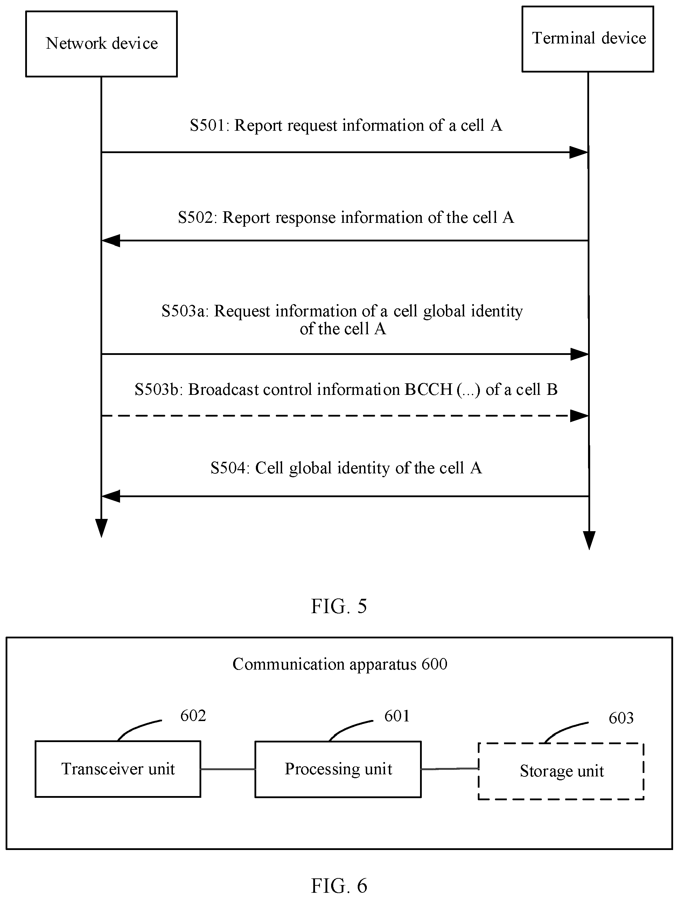

For example, the terminal device performs the neighboring cell measurement. Refer to FIG. 5. Specific steps are as follows:

S501: The network device sends report request information of a cell A to the terminal device, where the report request information is used to request radio access technology (radio access technology, RAT) information, a frequency Frequency, and radio access technology type RAT type information of the cell A.

S502: The terminal device returns report response information of the cell A to the network device, where the report response information includes a physical cell identifier (physical cell identifier, Phy-CID), a signal level signal level, and a radio access technology type RAT type of the cell A.

S503a: The network device sends request information of a cell global identity of the cell A to the terminal device.

S503b: The network device sends a broadcast control channel (broadcast control channel, BCCH) of a cell B to the terminal device, where the BCCH is used to transmit common information, so that the terminal device measures signal strength, identifies a cell identifier, and so on.

S504: The terminal device sends the cell global identity of the cell A to the network device.

The report request information of the cell A received by the terminal device in step S501 is the first request information in the information about the neighboring cell received by the terminal device in this embodiment of this application. In the report request information, the radio access technology type RAT type information of the cell A is newly added, and the RAT type of the cell A may be an ascending-orbit or descending-orbit type of the cell A.

Therefore, for a problem of difficulty in collaborating ascending-orbit and descending-orbit neighboring cells, the terminal device may measure and report a type of the neighboring cell (that is, an ascending-orbit cell or a descending-orbit cell), to assist in updating a neighboring cell relation for the ascending-orbit and descending-orbit neighboring cells.

In an implementation, for the foregoing ascending-orbit and descending-orbit cells that need to be dynamically configured, the terminal device may dynamically configure the ascending-orbit and descending-orbit cells in the following manner.

The terminal device preferably uses, based on type information of a satellite cell accessed by the terminal device, cell configuration information of a same frequency or a same ascending-orbit or descending-orbit type, to implement cell handover/reselection. For example, the network device may send the first information to a cell of a same type (an ascending-orbit/descending-orbit type) to configure a high priority. The first information includes priority information, and the first information may be one or more of DCI information, MAC CE information, a SIBx, and RRC information.

Therefore, in the foregoing manner of dynamically configuring the ascending-orbit and descending-orbit cells, interference between ascending-orbit and descending-orbit satellite cells can be reduced, and unnecessary reselection/handover between the ascending-orbit and descending-orbit satellites/cells can be avoided.

In conclusion, this application provides a communication method. The method includes: A terminal device obtains first information, where the first information is used for mobility management of ascending-orbit and descending-orbit cells, and the first information is related to a latitude location. The terminal device performs the mobility management based on the first information. According to the method, in a scenario of ascending-orbit and descending-orbit cells in a satellite network, mobility management does not need to be frequently performed with frequency switching of ascending and descending orbits. In this way, efficiency of the mobility management of the terminal device can be improved, and system signaling overheads can also be reduced.

The following describes a communication apparatus provided in embodiments of this application.

Based on a same technical concept, an embodiment of this application provides a communication apparatus. The apparatus may be used in a terminal device in the method in this application. To be specific, the apparatus includes a module or a unit in one-to-one correspondence with the method/operation/step/action performed by the terminal device in the foregoing embodiments. The module or the unit may be implemented by a hardware circuit, software, or a combination of a hardware circuit and software. The communication apparatus has a structure shown in FIG. 6.

As shown in FIG. 6, the communication apparatus 600 may include a processing unit 601. The processing unit 601 is equivalent to a processing module, and may be configured to perform a mobility management process.

Optionally, the communication apparatus 600 further includes a transceiver unit 602. The transceiver unit 602 may implement a corresponding communication function. Specifically, the transceiver unit 602 may specifically include a receiving unit and/or a sending unit. The receiving unit may be configured to receive information, data, and/or the like, and the sending unit may be configured to send information and/or data. The transceiver unit may also be referred to as a communication interface or a transceiver module.

Optionally, the communication apparatus 600 may further include a storage unit 603. The storage unit 603 is equivalent to a storage module, and may be configured to store instructions and/or data. The processing unit 601 may read the instructions and/or the data in the storage module, to enable the communication apparatus to implement the foregoing method embodiments.

The communication apparatus module 600 may be configured to perform an action performed by the terminal device in the foregoing method embodiments. The communication apparatus 600 may be a terminal device or a component that can be disposed in the terminal device. The transceiver unit 602 is configured to perform a sending-related operation on a terminal device side in the foregoing method embodiments, and the processing unit 601 is configured to perform a processing-related operation on the terminal device side in the foregoing method embodiments.

Optionally, the transceiver unit 602 may include a sending unit and a receiving unit. The sending unit is configured to perform a sending operation in the foregoing method embodiments. The receiving unit is configured to perform a receiving operation in the foregoing method embodiments.

It should be noted that the communication apparatus 600 may include a sending unit, but does not include a receiving unit. Alternatively, the communication apparatus 600 may include a receiving unit, but does not include a sending unit. This may be specifically determined depending on whether the foregoing solution performed by the communication apparatus 600 includes a sending action and a receiving action.

In an example, the communication apparatus 600 is configured to perform an action performed by the terminal device in the embodiment shown in FIG. 3.

For example, the transceiver unit 602 is configured to obtain information about an uplink channel of the terminal device. The transceiver unit 602 is further configured to receive first information from a network device, where the first information is used for mobility management of ascending-orbit and descending-orbit cells, and the first information is related to a latitude location.

The processing unit 601 is configured to perform the mobility management.

It should be understood that a specific process in which the modules perform the foregoing corresponding processes has been described in detail in the foregoing method embodiments. For brevity, details are not described herein again.

The processing unit 601 in the foregoing embodiment may be implemented by at least one processor or processor-related circuit. The transceiver unit 602 may be implemented by a transceiver or a transceiver-related circuit. The storage unit 603 may be implemented by at least one memory.

Based on a same technical concept, an embodiment of this application provides a communication apparatus. The apparatus may be further used in a network device in the method in this application. To be specific, the apparatus includes a module or a unit in one-to-one correspondence with the method/operation/step/action performed by the network device in the foregoing embodiments. The module or the unit may be implemented by a hardware circuit, software, or a combination of a hardware circuit and software. The communication apparatus may also have a structure shown in FIG. 6.

As shown in FIG. 6, the communication apparatus 600 may include a processing unit 601. The processing unit 601 is equivalent to a processing module, and may be configured to perform a process of determining first information of a terminal device.

Optionally, the communication apparatus 600 further includes a transceiver unit 602. The transceiver unit 602 may implement a corresponding communication function. Specifically, the transceiver unit 602 may specifically include a receiving unit and/or a sending unit. The receiving unit may be configured to receive information, data, and/or the like, and the sending unit may be configured to send information and/or data. The transceiver unit may also be referred to as a communication interface or a transceiver module.

Optionally, the communication apparatus 600 may further include a storage unit 603. The storage unit 603 is equivalent to a storage module, and may be configured to store instructions and/or data. The processing unit 601 may read the instructions and/or the data in the storage module, to enable the communication apparatus to implement the foregoing method embodiments.

The communication apparatus 600 may be configured to perform an action performed by the network device in the foregoing method embodiments. The communication apparatus 600 may be a network device or a component that can be disposed in the network device. The transceiver unit 602 is configured to perform a receiving-related operation on a network device side in the foregoing method embodiments, and the processing unit 601 is configured to perform a processing-related operation on the network device side in the foregoing method embodiments.

Optionally, the transceiver unit 602 may include a sending unit and a receiving unit. The sending unit is configured to perform a sending operation in the foregoing method embodiments. The receiving unit is configured to perform a receiving operation in the foregoing method embodiments.

It should be noted that the communication apparatus 600 may include a sending unit, but does not include a receiving unit. Alternatively, the communication apparatus 600 may include a receiving unit, but does not include a sending unit. This may be specifically determined depending on whether the foregoing solution performed by the communication apparatus 600 includes a sending action and a receiving action.

In an example, the communication apparatus 600 is configured to perform an action performed by the network device in the embodiment shown in FIG. 3.

For example, the processing unit 601 is configured to determine the first information of the terminal device. The transceiver unit 602 is configured to send the first information to the terminal device, where the first information is used for mobility management of ascending-orbit and descending-orbit cells, and the first information is related to a latitude location.

It should be understood that a specific process in which the units perform the foregoing corresponding processes has been described in detail in the foregoing method embodiments. For brevity, details are not described herein again.

The processing unit 601 in the foregoing embodiment may be implemented by at least one processor or processor-related circuit. The transceiver unit 602 may be implemented by a transceiver or a transceiver-related circuit. The storage unit 603 may be implemented by at least one memory.

This application further provides a communication apparatus. The communication apparatus may be a terminal device, a processor of the terminal device, or a chip. The communication apparatus may be configured to perform an operation performed by the terminal device in the foregoing method embodiments. Alternatively, the communication apparatus may be a network device, a processor of the network device, or a chip. The communication apparatus may be configured to perform an operation performed by the network device in the foregoing method embodiments.

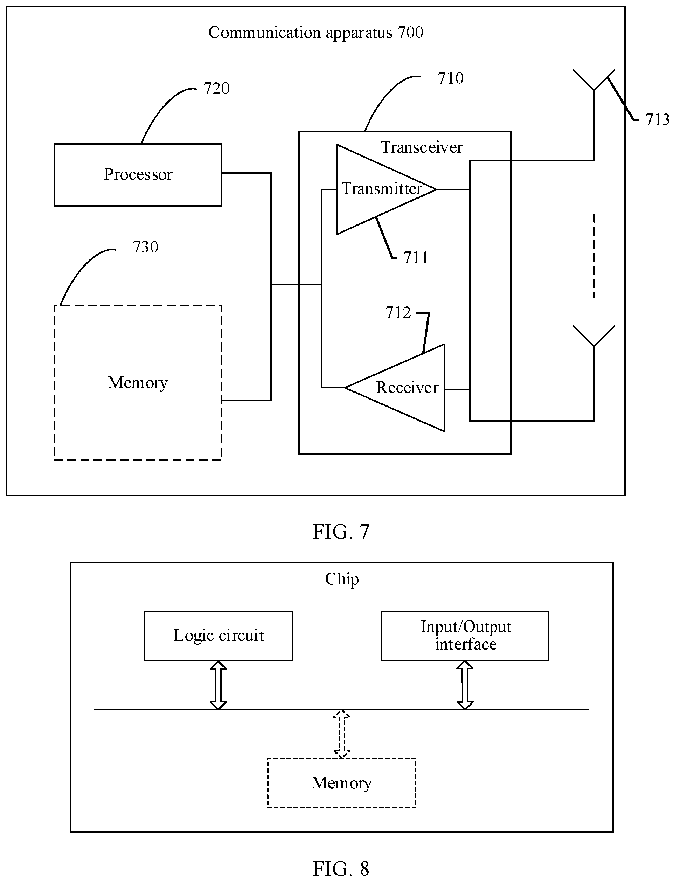

When the communication apparatus 700 is the terminal device, FIG. 7 is a simplified diagram of a structure of the communication apparatus. As shown in FIG. 7, the communication apparatus 700 includes a transceiver 710 and a processor 720. The transceiver 710 includes a transmitter 711, a receiver 712, a radio frequency circuit (not shown), an antenna 713, and an input/output apparatus (not shown). Optionally, the communication apparatus 700 further includes a memory 730. The memory 730 may store computer program code.

The processor 720 is mainly configured to: process a communication protocol and communication data, control the communication apparatus 700, execute a software program, process data of the software program, and so on. The memory is mainly configured to store the software program and the data. The radio frequency circuit is mainly configured to perform conversion between a baseband signal and a radio frequency signal, and process the radio frequency signal. The antenna 713 is mainly configured to receive and send a radio frequency signal in a form of an electromagnetic wave. The input/output apparatus, for example, a touchscreen, a display screen, or a keyboard, is mainly configured to receive data input by a user and output data to the user. It should be noted that some types of terminal devices may have no input/output apparatus.

When data needs to be sent, the processor 720 performs baseband processing on the to-be-sent data, and outputs a baseband signal to the radio frequency circuit. After performing radio frequency processing on the baseband signal, the radio frequency circuit sends, through the antenna, the radio frequency signal to the outside in a form of an electromagnetic wave. When data is sent to the network device, the radio frequency circuit receives a radio frequency signal through the antenna, converts the radio frequency signal into a baseband signal, and outputs the baseband signal to the processor. The processor 720 converts the baseband signal into data, and processes the data. For ease of description, FIG. 7 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In embodiments of this application, the antenna and the radio frequency circuit that have a transceiver function may be considered as a transceiver unit (a transceiver unit) of the terminal device, and the processor that has a processing function may be considered as a processing unit (a processing module) of the terminal device.

As shown in FIG. 7, the communication apparatus 700 includes a transceiver 710, a processor 720, and a memory 730. The transceiver 710 may also be referred to as a transceiver unit, a transceiver machine, a transceiver apparatus, or the like. The processor 720 may also be referred to as a processing unit, a processing board, a processing module, a processing apparatus, or the like.

Optionally, a component that is in the transceiver 710 and that is configured to implement a receiving function may be considered as a receiving module, and a component that is in the transceiver 710 and that is configured to implement a sending function may be considered as a sending unit or a sending module. In other words, the transceiver 710 includes a transmitter 711 and a receiver 712. The transceiver 710 may also be sometimes referred to as a transceiver machine, a transceiver unit, a transceiver circuit, or the like. The transmitter 711 may also be sometimes referred to as a transmitter machine, a transmitting unit, a transmitter circuit, or the like. The receiver 712 may also be sometimes referred to as a receiver machine, a receiving unit, a receiver circuit, or the like.

For example, in an implementation, the processor 720 is configured to perform a processing action on a terminal device side in the embodiment shown in FIG. 3, and the transceiver 710 is configured to perform a receiving and sending action on the terminal device side in FIG. 3. For example, the transceiver 710 is configured to perform an operation of S301 in the embodiment shown in FIG. 3, and may specifically receive first information. The processor 720 is configured to perform a processing operation of S302 in the embodiment shown in FIG. 3, and may specifically determine to perform mobility management.

It should be understood that FIG. 7 is merely an example rather than a limitation. The terminal device including the processor, the transceiver, and the memory may not depend on the structure shown in FIG. 7.

When the communication apparatus 700 is the chip, the processor 720 may be implemented by hardware, or may be implemented by software. When the processor 720 is implemented by hardware, the processor 720 may be a logic circuit, an integrated circuit, or the like. When the processor 720 is implemented by software, the processor 720 may be a general-purpose processor, and is implemented by reading software code stored in a memory. The memory may be integrated into the processor, or may be located outside the processor and exist independently.

An embodiment of this application further provides a chip. FIG. 8 is a simplified schematic of a structure of the chip. The chip includes a logic circuit and an input/output interface, and may further include a memory. The input/output interface is configured to receive/output code instructions or information (where the code instructions or the information are/is stored in the memory, and may be directly read from the memory, or may be read from the memory through another component). The logic circuit is configured to execute the code instructions or perform, based on the first information, the communication method described in any one of the method embodiments applied to the terminal device.

The chip may implement a function shown in the processing unit and/or the transceiver unit in the foregoing embodiments.

For example, the input/output interface is configured to input first information. Optionally, the input/output interface may be further configured to receive code instructions. The code instructions are used to instruct to perform mobility management based on the first information.

When the communication apparatus is the network device, for example, a base station, FIG. 7 is a simplified schematic of a structure of the communication apparatus. The communication apparatus 700 includes a transceiver 710, a processor 720, and a memory 730. The processor 720 is mainly configured to perform baseband processing, control the communication apparatus 700, and so on. The processor 720 is usually a control center of a base station, may be usually referred to as a processor, and is configured to control the communication apparatus 700 to perform a processing operation on a network device side in the foregoing method embodiments. The memory 730 is mainly configured to store computer program code and data. The transceiver 710 is mainly configured to receive and send a radio frequency signal and perform conversion between the radio frequency signal and a baseband signal. The transceiver 710 may be usually referred to as a transceiver unit, a transceiver machine, a transceiver circuit, a transceiver, or the like. A transceiver unit of the transceiver 710 may also be referred to as a transceiver machine, a transceiver, or the like, and includes an antenna 713 and a radio frequency circuit (not shown). The radio frequency circuit is mainly configured to perform radio frequency processing. Optionally, a component that is in the transceiver 710 and that is configured to implement a receiving function may be considered as a receiver, and a component that is in the transceiver 710 and that is configured to implement a sending function may be considered as a transmitter. In other words, the transceiver 710 includes the transmitter 711 and the receiver 712. The receiver may also be referred to as a receiving module, a receiver machine, a receiver circuit, or the like, and the transmitter may be referred to as a transmitting module, a transmitter machine, a transmitter circuit, or the like.

The transceiver 710 and the memory 730 may include one or more boards, and each board may include one or more processors and one or more memories. The processor is configured to read and execute a program in the memory, to implement a baseband processing function and control the base station. If there are a plurality of boards, the boards may be interconnected with each other, to enhance a processing capability. In an optional implementation, a plurality of boards may share one or more processors, or a plurality of boards share one or more memories, or a plurality of boards share one or more processors at the same time.

For example, in an implementation, the transceiver unit of the transceiver 710 is configured to perform a receiving and sending related process performed by the network device in the embodiment shown in FIG. 3. A processing unit of the processor 720 is configured to perform a processing-related process performed by the network device in the embodiment shown in FIG. 3.

It should be understood that FIG. 7 is merely an example rather than a limitation. The network device including the processor, the transceiver, and the memory may not depend on the structure shown in FIG. 7.

When the communication apparatus is the chip, the processor may be implemented by hardware, or may be implemented by software. When the processor is implemented by hardware, the processor may be a logic circuit, an integrated circuit, or the like. When the processor is implemented by software, the processor may be a general-purpose processor, and is implemented by reading software code stored in a memory. The memory may be integrated into the processor, or may be located outside the processor and exist independently.

An embodiment of this application further provides a chip. FIG. 8 is a simplified schematic of a structure of the chip. The chip includes a logic circuit and an input/output interface, and may further include a memory. The input/output interface is configured to receive/output code instructions or information (where the code instructions or the information are/is stored in the memory, and may be directly read from the memory, or may be read from the memory through another component). The logic circuit is configured to execute the code instructions or perform, based on the first information, the communication method described in any one of the method embodiments applied to the network device.

The chip may implement a function shown in the processing unit and/or the transceiver unit in the foregoing embodiments.

For example, the input/output interface may be further configured to receive code instructions. The code instructions are used to instruct to determine first information of the terminal device. The input/output interface is configured to output the first information.

The processor mentioned anywhere above may be a general central processing unit, a microprocessor, an application-specific integrated circuit (application-specific integrated circuit, ASIC), or one or more integrated circuits configured to control program execution of the communication method shown in FIG. 3. The memory mentioned anywhere above may be a read-only memory (read-only memory, ROM), another type of static storage device that can store static information and instructions, a random access memory (random access memory, RAM), or the like.

An embodiment of this application further provides a computer-readable storage medium. The computer-readable storage medium stores computer instructions used to implement the method performed by the terminal device or the network device in the foregoing method embodiments.

For example, when a computer program is executed by a computer, the computer is enabled to implement the method performed by the terminal device or the network device in the foregoing method embodiments.

An embodiment of this application further provides a computer program product including instructions. When the instructions are executed by a computer, the computer is enabled to implement the method performed by the terminal device or the network device in the foregoing method embodiments.

An embodiment of this application further provides a communication system. The communication system includes the terminal device and the network device in the foregoing embodiments.

It should be noted that, for ease and brevity of description, for explanations and beneficial effects of related content of any one of the communication apparatuses provided above, refer to the corresponding method embodiments provided above. Details are not described herein again.

In this application, the network device or the terminal device may include a hardware layer, an operating system layer running above the hardware layer, and an application layer running above the operating system layer. The hardware layer may include hardware such as a central processing unit (central processing unit, CPU), a memory management module (memory management unit, MMU), and a memory (also referred to as a main memory). An operating system at the operating system layer may be any one or more computer operating systems that implement service processing by using a process (process), for example, a Linux operating system, a Unix operating system, an Android operating system, an iOS operating system, or a Windows operating system. The application layer may include applications such as a browser, an address book, word processing software, and instant messaging software.

Division into the modules in embodiments of this application is an example, is merely division into logical functions, and may be other division during actual implementation. In addition, functional modules in embodiments of this application may be integrated into one processor, or each of the modules may exist alone physically, or two or more modules may be integrated into one module. The integrated module may be implemented in a form of hardware, or may be implemented in a form of a software functional module.

Through descriptions of the foregoing implementations, a person skilled in the art may clearly understand that embodiments of this application may be implemented by hardware, firmware, or a combination thereof. When embodiments of this application are implemented by software, the foregoing functions may be stored in a computer-readable medium or transmitted as one or more instructions or code in the computer-readable medium. The computer-readable medium includes a computer storage medium and a communication medium. The communication medium includes any medium that facilitates transmission of a computer program from one place to another. The storage medium may be any available medium accessible to a computer. Examples of the computer-readable medium include but are not limited to: a RAM, a ROM, an electrically erasable programmable read only memory (electrically erasable programmable read only memory, EEPROM), a compact disc read-only memory (compact disc read-only memory, CD-ROM) or another optical disc storage, a disk storage medium or another disk storage device, or any other medium that can be used to carry or store expected program code in an instruction or data structure form and can be accessed by a computer. In addition, any connection may be appropriately defined as a computer-readable medium. For example, if software is transmitted from a website, a server, or another remote source by using a coaxial cable, an optical fiber cable, a twisted pair, a digital subscriber line (digital subscriber line, DSL), or wireless technologies such as infrared, radio, and microwave, the coaxial cable, the optical fiber cable, the twisted pair, the DSL, or the wireless technologies such as infrared, radio, and microwave are included in a definition of a medium to which the coaxial cable, the optical fiber cable, the twisted pair, the DSL, or the wireless technologies such as the infrared ray, the radio, and the microwave belong. For example, a disk (disk) and a disc (disc) used in embodiments of this application include a compact disc (compact disc, CD), a laser disc, an optical disc, a digital video disc (digital video disc, DVD), a floppy disk and a Blu-ray disc. The disk usually magnetically copies data, and the disc optically copies data in a laser manner. The foregoing combination should also be included in the protection scope of the computer-readable medium.

In conclusion, the foregoing descriptions are merely embodiments of this application and are not intended to limit the protection scope of this application. Any modification, equivalent substitution, and improvement made based on the disclosure of this application shall fall within the protection scope of this application.

## Claims

1. A communication method, comprising:
obtaining, by a terminal device, first information, wherein the first information is used for mobility management of ascending-orbit and descending-orbit cells, and the first information is related to a latitude location; and
performing, by the terminal device, the mobility management based on the first information.

2. The method according to claim 1, wherein the first information comprises at least one of the following: a handover condition, information about a first timer, frequency information, or polarization information.

3. The method according to claim 2, wherein the handover condition is determined based on the latitude location.

4. The method according to any one of claims 1 to 3, wherein the first information comprises beam position information, and the beam position information comprises at least one of the following: index information of a beam position, location information of a reference point of the beam position, handover indication information, and information about a second timer.

5. The method according to any one of claims 1 to 4, wherein the first information comprises serving cell information, the serving cell information comprises information about a neighboring cell, the information about the neighboring cell comprises first request information, and the first request information is used to request ascending-orbit or descending-orbit type information of the neighboring cell.

6. The method according to claim 5, wherein configuration information of the neighboring cell comprises neighboring cell identifier information, neighboring cell relation information, and latitude location information of the neighboring cell, wherein whether the neighboring cell is an activated neighboring cell is determined based on the latitude location information of the neighboring cell and a threshold.

7. The method according to claim 3, wherein the performing, by the terminal device, the mobility management based on the first information comprises:
determining, by the terminal device, the latitude location of the terminal device based on a global navigation satellite system GNSS; and
performing, by the terminal device, the mobility management when determining that the latitude location and a threshold meet the handover condition.

8. The method according to claim 4 or 5, wherein the performing, by the terminal device, the mobility management based on the first information comprises:
performing, by the terminal device, the mobility management based on the index information of the beam position and the handover indication information;
performing, by the terminal device, the mobility management based on the index information of the beam position, the handover indication information, and the information about the second timer;
performing, by the terminal device, the mobility management based on the location information of the reference point of the beam position and the latitude location of the terminal device; or
performing, by the terminal device, the mobility management based on the location information of the reference point of the beam position, the latitude location of the terminal device, and the information about the second timer.

9. A communication method, comprising:
determining, by a network device, first information of a terminal device, wherein the first information is used for mobility management of ascending-orbit and descending-orbit cells, and the first information is related to a latitude location; and
sending, by the network device, the first information to the terminal device.

10. The method according to claim 9, wherein the first information comprises at least one of the following: a handover condition, information about a first timer, frequency information, and polarization information.

11. The method according to claim 10, wherein the handover condition is determined based on the latitude location.

12. The method according to any one of claims 9 to 11, wherein the first information comprises beam position information, and the beam position information comprises at least one of the following: index information of a beam position, location information of a reference point of the beam position, handover indication information, and information about a second timer.

13. The method according to any one of claims 9 to 12, wherein the first information comprises serving cell information, the serving cell information comprises information about a neighboring cell, the information about the neighboring cell comprises first request information, and the first request information is used to request ascending-orbit or descending-orbit type information of the neighboring cell.

14. The method according to claim 13, wherein configuration information of the neighboring cell comprises neighboring cell identifier information, neighboring cell relation information, and latitude location information of the neighboring cell, wherein whether the neighboring cell is an activated cell is determined based on the latitude location information of the neighboring cell and a threshold.

15. A communication apparatus, comprising a transceiver unit and a processing unit, wherein
the transceiver unit is configured to obtain first information, wherein the first information is used for mobility management of ascending-orbit and descending-orbit cells, and the first information is related to a latitude location; and
the processing unit is configured to perform the mobility management based on the first information.

16. The apparatus according to claim 15, wherein the first information comprises at least one of the following: a handover condition, information about a first timer, frequency information, and polarization information.

17. The apparatus according to claim 16, wherein the handover condition is determined based on the latitude location.

18. The apparatus according to any one of claims 15 to 17, wherein the first information comprises beam position information, and the beam position information comprises at least one of the following: index information of a beam position, location information of a reference point of the beam position, handover indication information, and information about a second timer.

19. The apparatus according to any one of claims 15 to 18, wherein the first information comprises serving cell information, the serving cell information comprises information about a neighboring cell, the information about the neighboring cell comprises first request information, and the first request information is used to request ascending-orbit or descending-orbit type information of the neighboring cell.

20. The apparatus according to claim 19, wherein configuration information of the neighboring cell comprises neighboring cell identifier information, neighboring cell relation information, and latitude location information of the neighboring cell, wherein whether the neighboring cell is an activated neighboring cell is determined based on the latitude location information of the neighboring cell and a threshold.

21. The apparatus according to claim 17, wherein when performing the mobility management based on the first information, the processing unit is specifically configured to:
determine the latitude location of a terminal device based on a global navigation satellite system GNSS; and
perform the mobility management when determining that the latitude location and a threshold meet the handover condition.

22. The apparatus according to claim 18 or 19, wherein when performing the mobility management based on the first information, the processing unit is specifically configured to:
perform the mobility management based on the index information of the beam position and the handover indication information;
perform the mobility management based on the index information of the beam position, the handover indication information, and the information about the second timer;
perform the mobility management based on the location information of the reference point of the beam position and the latitude location of a terminal device; or
perform the mobility management based on the location information of the reference point of the beam position, the latitude location of a terminal device, and the information about the second timer.

23. A communication apparatus, comprising a transceiver unit and a processing unit, wherein
the processing unit is configured to determine first information of a terminal device, wherein the first information is used for mobility management of ascending-orbit and descending-orbit cells, and the first information is related to a latitude location; and
the transceiver unit is configured to send the first information to the terminal device.

24. The apparatus according to claim 23, wherein the first information comprises at least one of the following: a handover condition, information about a first timer, frequency information, and polarization information.

25. The apparatus according to claim 24, wherein the handover condition is determined based on the latitude location.

26. The apparatus according to any one of claims 23 to 25, wherein the first information comprises beam position information, and the beam position information comprises at least one of the following: index information of a beam position, location information of a reference point of the beam position, handover indication information, and information about a second timer.

27. The apparatus according to any one of claims 23 to 26, wherein the first information comprises serving cell information, the serving cell information comprises information about a neighboring cell, the information about the neighboring cell comprises first request information, and the first request information is used to request ascending-orbit or descending-orbit type information of the neighboring cell.

28. The apparatus according to claim 27, wherein configuration information of the neighboring cell comprises neighboring cell identifier information, neighboring cell relation information, and latitude location information of the neighboring cell, wherein whether the neighboring cell is an activated neighboring cell is determined based on the latitude location information of the neighboring cell and a threshold.

29. A communication apparatus, comprising a processor, wherein the processor is coupled to a memory, the memory is configured to store a program or instructions, and when the program or the instructions is/are executed by the processor, the method according to any one of claims 1 to 8 is performed, or the method according to any one of claims 9 to 14 is performed.

30. A communication apparatus, comprising a logic circuit and an input/output interface, wherein
the input/output interface is configured to obtain first information, and the logic circuit is configured to perform the method according to any one of claims 1 to 8; or
the input/output interface is configured to output first information, and the logic circuit is configured to perform the method according to any one of claims 9 to 14.

31. A computer-readable storage medium, storing a computer program, wherein when the computer program is run on a processor, the method according to any one of claims 1 to 8 is performed, or the method according to any one of claims 9 to 14 is performed.

32. A computer program product comprising instructions, wherein when the computer program product runs on a computer, the method according to any one of claims 1 to 8 is performed, or the method according to any one of claims 9 to 14 is performed.

33. A communication system, wherein the communication system comprises the apparatus according to any one of claims 15 to 22 and the apparatus according to any one of claims 23 to 28.
